# EUROPEAN PATENT APPLICATION

(11) **EP 1 942 659 A1**
(43) Date of publication of application: **09.07.2008**
(21) Application number: 06125909.9
(22) Date of filing: 12.12.2006
(51) Int. Cl.: H04N 5/217

(54) **Improved method for capturing image data**

(71) Applicant: Axis AB, 223 69 Lund (SE)
(72) Inventor: Johannesson, Anders, 23631 Höllviken (SE); Anderberg, Daniel, 22468 Lund (SE); Kannermark, Per, 21228 Malmö (SE)
(74) Representative: Andersson, Björn E.

(57) **Abstract**

The invention relates to a method for reducing smear effect in an image sensor. Firstly, a first charge level value from a first set of covered elements and a second charge level value from a second set of covered elements are received. Secondly, the first and the second charge level values are compared. Thirdly, if a difference resulting from said comparing said first and said second charge level values is outside a predetermined interval, camera settings are adjusted.

## Description

### Technical field

The present invention generally relates to a method for reducing smear effect in an image sensor, as well as a module and a camera.

### Background of the invention

A modern camera comprises an image sensor, such as a CCD sensor, which, in general terms, transforms incident light to electronic signals. In order to provide as good image data as possible from such a camera it is of great interest to have a number of camera control functions. Briefly speaking, these functions are adapted to detect non-optimal situations and to correct these non-optimal situations by changing the settings of the camera.

An example of a non-optimal situation is when very intensive light is incident onto the image sensor. This very intensive light may, if no properly working control function is available, result in a phenomena called smear. Image data affected by smear comprises stripes which intersect the points of the image data where the very intensive light is present.

A number of solutions for reducing the effect of smear have been developed. For instance, one solution suggests that the elecric charges are output very quickly, which may be a problem in a camera having high resolution, i.e. an image sensor comprising many photosensitive elements. Another solution suggests that the diaphragm should be closed during the output of the electric charges generated by the image sensor, which is difficult in a camera having high frame rate.

### Summary

In view of the above, an objective of the invention is to solve or at least reduce the problems discussed above. In particular, an objective is to provide an efficient method for reducing the effects of smear.

The meaning of row and column in this text is to be interpreted openly as elements placed side-by-side in a first direction and elements placed side-by-side in a second direction, respectively.

Further, the wordings of horisontal and vertical are also to be interpreted openly as a first direction and a second direction, wherein the second direction is orthogonal to the first direction.

The above object is provided according to a first aspect of the invention by a method for reducing smear effect in an image sensor comprising
receiving a first charge level value from a first set of covered elements,
receiving a second charge level value from a second set of covered elements,
comparing said first and said second charge level values, and
adjusting camera settings if a difference resulting from said comparing said first and said second charge level values is outside a predetermined interval.

An advantage of this is that the covered elements which may be used for determining the amount of noise and for determining a black reference level may also be used for determining if smear is present in the image data.

The first set of covered elements may be positioned in a first border area of said image sensor, and said second set of covered elements may be positioned in a second border area of said image sensor.

The first set may comprise at least one element of a smear insensitive reference array, and the second set may comprise at least one element of a smear sensitive array.

In the context of the present invention, an image sensor is considered to comprise two types of arrays of photosensitive elements, a smear insensitive reference array and a smear sensitive array.

The smear insensitive reference array comprises a number of covered photosensitive elements, which photosensitive elements are configured to generate electric charges and to sequentially output these electric charges from the smear insensitive reference array.

The smear sensitive array comprises a number of photosensitive elements, which photosensitive elements are configured to generate electric charges and to sequentially output these electric charges from the smear sensitive array, and of which photosensitive elements at least one photosensitive element is a non-covered photosensitive element.

An advantage of having a first set comprising at least one element of a smear insensitive reference array and a second set comprising at least one element of a smear sensitive array is that no smear arises in the first set, which implies that if there is a difference, there is smear present in the second set.

The first set of elements and the second set of elements may be disjunctive.

Further, the first set of elements may comprise at least one element selected from a group consisting of upper left corner elements, upper right corner elements, lower left corner elements and lower right corner elements.

A corner element is recognized by that the row of the corner element comprises covered elements and that the column of the corner element comprises covered elements. Because of this, the corner elements are less affected by light leakage than other covered border elements, which means that the corner elements are appropriate as elements of the first set.

Further, the first set may be larger than the second set.

An advantage of this is that a large first set is less dependent on individual elements, which means that the affect of noise is reduced.

The image sensor may be a CCD sensor.

The adjusting of said camera settings may comprise adjusting amount of incident light onto said image sensor.

By reducing the amount of incident light onto the image sensor, the risk of visible smear is reduced, which is an advantage.

The adjustment of incident light onto said image sensor may be performed by a lens aperture adjustment.

The adjusting of said camera settings may comprise adjusting an exposure time setting.

The adjusting of said camera settings may comprise adjusting a gain setting.

The first set of covered elements may also be utilised to achieve a reference black level.

The above object is provided according to a second aspect by a smear reduction module for reducing smear effect in an image sensor comprising
a first charge level value receiver configured to receive a first charge level value from a first set of covered elements,
a second charge level value receiver configured to receive a second charge level value from a second set of covered elements,
a comparator configured to compare said first and said second charge level values, and
a camera settings controller configured to adjust camera settings if a difference resulting from said comparing said first and said second charge level values is outside a predetermined interval.

The advantages of the first aspect are also applicable for this second aspect.

The first set of covered elements may be positioned in a first border area of said image sensor, and said second set of covered elements may be positioned in a second border area of said image sensor.

The first set may comprise at least one element of a smear insensitive reference array, and said second set may comprise at least one element of a smear sensitive array.

The first set of elements and said second set of elements may be disjunctive.

Further, the first set of elements may comprise at least one element selected from a group consisting of upper left corner elements, upper right corner elements, lower left corner elements and lower right corner elements.

The first set of elements may be larger than said second set of elements.

The image sensor may be a CCD sensor.

The adjusting of said camera settings may comprise adjusting amount of incident light onto said image sensor.

The adjustment of incident light onto said image sensor may be performed by a lens aperture setting.

The adjusting of said camera settings may comprise adjusting an exposure time setting.

The adjusting of said camera settings may comprise adjusting a gain setting.

The first set of covered elements may also be utilised to achieve a reference black level.

The above object is provided according to a third aspect by a camera comprising
an image sensor,
a camera controller,
a smear reduction module according to the second aspect,
a light shielding device configured to affect the amount of light inciding onto said image sensor,
wherein smear control data is transferred from said smear reduction module to said camera controller, and from said camera controller control data is transferred to said light shielding device.

The image sensor may be a CCD sensor.

The above object is provided according to a fourth aspect by a computer program arranged to perform the method according to the first aspect when downloaded into and run on a processor.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig 1 illustrates the general structure of a CCD sensor.
Fig 2 generally illustrates an example of a CCD sensor matrix.
Fig 3 generally illustrates a cross sectional view of the examplified sensor matrix of fig 2.
Fig 4 generally illustrates the smear effect in a sensor matrix comprising covered elements and non-covered elements.
Fig 5 generally illustrates a first embodiment of a sensor matrix comprising covered elements and non-covered elements.
Fig 6 generally illustrates a second embodiment of a sensor matrix.
Fig 7a illustrates a smear column value and a smear reference value in a situation where visible smear is present.
Fig 7b illustrates a smear column value and a smear reference value in a situation where visible smear is not present.
Fig 8 illustrates a general principle for reducing the amount of smear in image data generated by a CCD sensor.
Fig 9 generally illustrates the occurrence of visible smear and diffraction in image data for different lens aperture size.
Fig 10 illustrates a method according to the present invention.
Fig 11 illustrates a smear reduction module according to the present invention.
Fig 12 illustrates a camera according to the present invention.

### Detailed description of preferred embodiments

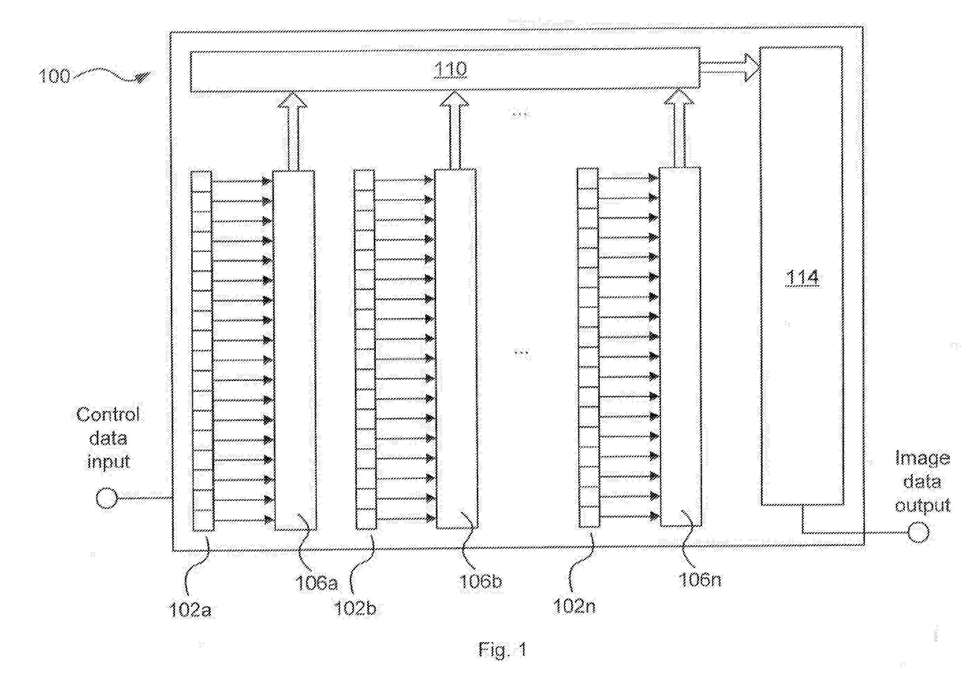

Fig 1 illustrates the general structure of a CCD sensor 100. More particularly, the CCD sensor 100 according to fig 1 is an area sensor, which means that a number of arrays of photosensitive elements 102a-102n are placed side-by-side, thereby constituting n columns of a sensor matrix.

Incident light onto an element of a photosensitive element 102a-102n give rise to electrical charges. These charges are transferred from the photosensitive element to a covered vertical transport register 106a-106n.

Next, the charges from all vertical registers 106a-106n are sequentially transferred to a horisontal transport register 110. Thereafter, the charges are sequentially transferred to an amplifier 114, where the charges are amplified and output from the CCD sensor 100 as image data.

Although the photosensitive elements are designed to absorb incident light, an effect referred to as smear may arise when light is incident on a photosensitive element. More particularly, smear appears as the light on the photosensitive element give rise to electrical charges that may diffuse into the covered transport registers 106a-106n. Alternatively, light may be reflected or refracted into the covered transport registers 106a-106n. When transferring the electrical charges generated by the photosensitive elements 102a-102n from the vertical transport register 106a-106n the extra electrons affect the result of the photosensitive elements 102a-102n. Due to the nature of the CCD read out smear affects the whole column in a motion video camera. The effect is generally increasing with light intensity.

Hence, image data affected by visible smear will have vertical stripes intersecting points with intensive light, such as a light source or a reflection of a light source on a shiny object, such as a metal plate. Smear may also affect the whole image if all columns are affected.

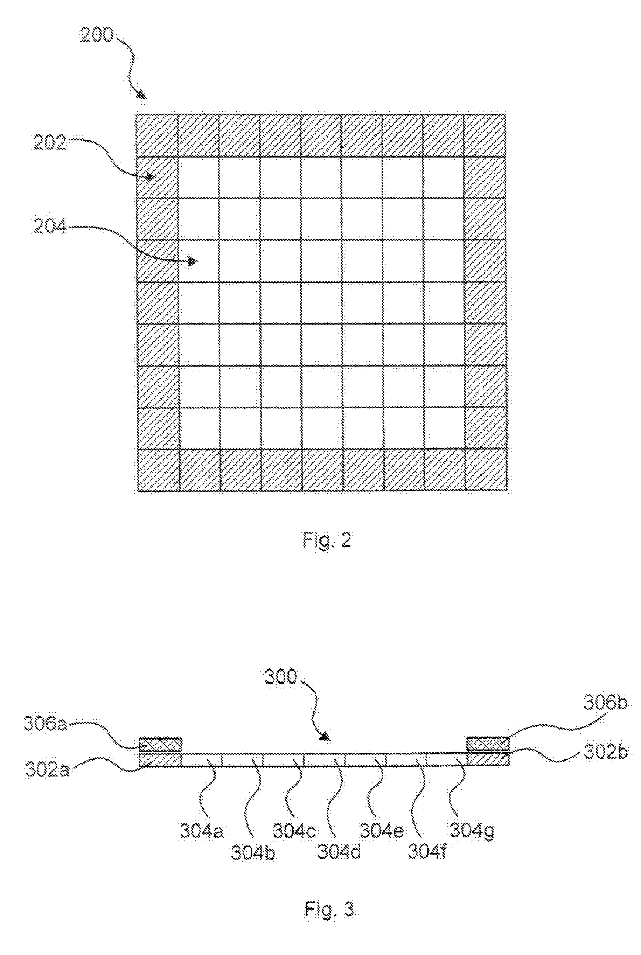

Fig 2 generally illustrates an example of a CCD sensor matrix 200. For illustrative purposes, the exemplified sensor matrix 200 only comprises nine rows and nine columns of photosensitive elements.

In the example, and generally in most of the CCD sensors of today, an uppermost row, a lowermost row, a leftmost column and a rightmost column of the sensor matrix 200 are covered in order to avoid that light incides onto these elements, hereafter referred to as covered elements 202, of the sensor matrix 200. The rest of the elements of the sensor matrix 200 are referred to as non-covered elements 204.

In order to cover the covered elements 202 a metal coating may be used. However, other opaque material, such as black plastics, may be used as well.

The values read out from the covered elements may be used as reference values, e.g. for determining the black level of the image data, for determining the amount of noise, or for determining the amount of smear present in the image data, which will be further illustrated in the following figures.

Several rows and columns may be covered by using the metal coating. An advantage of covering several rows and columns is that less light leakage will reach the outer rows and columns, and hence better reference values may be achieved.

There is no requirement that both end rows, i.e. the leftmost and rightmost column, and that both end columns, i.e. the uppermost and lowermost column, should be covered, although illustrated in fig 2.

Fig 3 generally illustrates a cross sectional view of an examplified sensor matrix 300 according to fig 2,
wherein the sensor matrix 300 comprises covered elements 302a-302b and non-covered elements 304a-304g, and a cover 306a-306b represented by a coating.

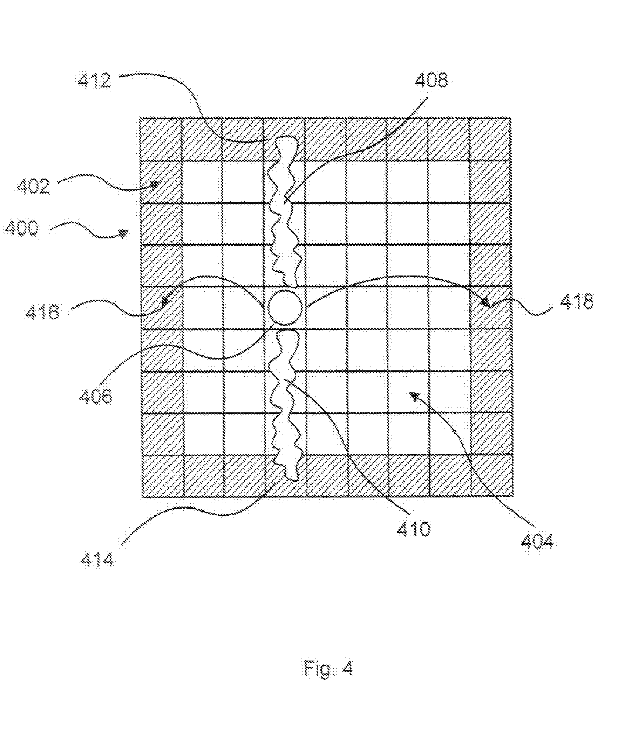

Fig 4 generally illustrates the smear effect in a sensor matrix 400 comprising covered elements 402, indicated by diagonal shading, and non-covered elements 404.

An intensive light is incident onto a non-covered element 406. This intensive light give rise to visible smear as described above. The smear effect is herein illustrated as two clouds, 408 and 410.

The smear arised in the column of the element 406 is also spread to the, in this example, two covered elements, element 412 and element 414.

Referring to the above description, smear is not spread to the two covered elements of the row of the element 406, referred to as element 416 and element 418.

Because of this, a smear column value may be determined based upon the charge levels of the elements 412 and/or 414, and a smear reference value may be determined based upon the charge levels of the elements 416 and/or 418.

The elements referred to in fig 4 may be individual elements as well as groups of elements, e.g. a group consisting of 32x32 elements.

In order to reduce the impact of individual photosensitive elements, e.g. reducing the effect of noise, blocks comprising a number of photosensitive elements may be utilised.

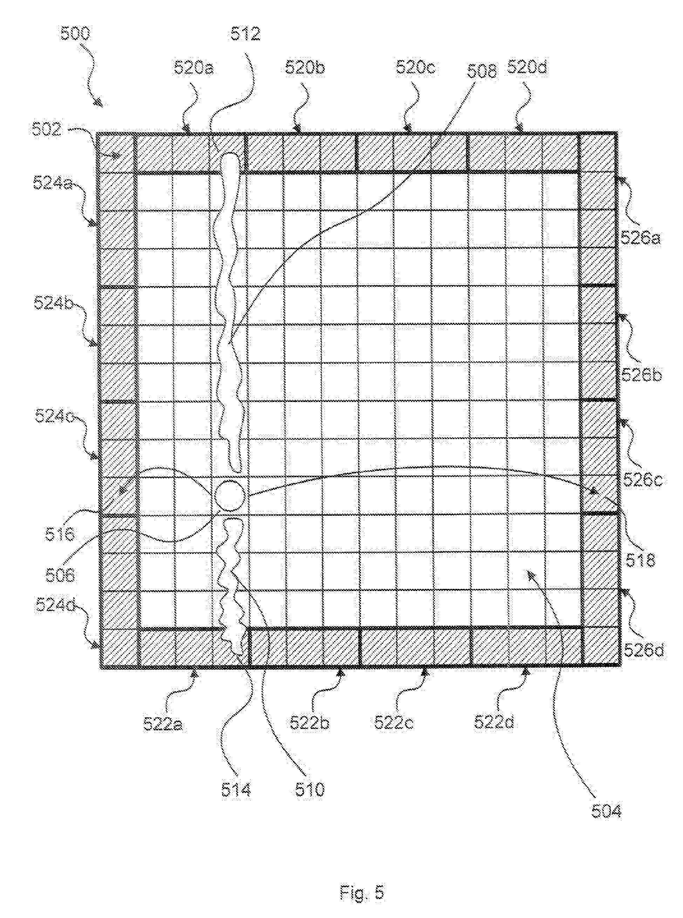

Fig 5 generally illustrates an embodiment of using the covered elements of a sensor matrix 500. Further, the sensor matrix 500 comprises covered elements 502, indicated by diagonal shading, and non-covered elements 504.

Further, the covered elements 502 can be sub-divided into a number of first blocks 520a-520d, a number of second blocks 522a-522d, a number of third blocks 524a-524d and a number of fourth blocks 526a-526d, illustrated by thick lines.

A smear column value may be determined by calculating an average charge level for each of the first blocks 520a-520d and/or for each of the second blocks 522a-522d, and then the maximum value of these determined average charge levels can be set as the smear column value.

Alternatively, since smear arises in the entire column, a smear column value may be determined by calculating the average charge level for each pair of first and second blocks, i.e. 520a and 522a, 520b and 522b, and so forth. Then the maximum value of these determined average charge levels can be set as the smear column value.

Alternatively, the smear column value may be determined by calculating the average charge level for elements comprised in several of the first blocks 520a-520d or in several of the second blocks 522a-522d.

If visible smear is present in large regions of the image data it may be advantageous to determine the smear column value by calculating the average charge level of the elements comprised in all the first blocks 520a-520d or in all the second blocks 522a-522d, since the many elements reduces the effect of noise.

A smear reference value may be determined by calculating the average charge level of the elements comprised in the third blocks 524a-524d or the fourth blocks 526a-526d.

Alternatively, the smear reference value may be determined by calculating the average charge level of the elements comprised in the third blocks 524a-524d and the fourth blocks 526a-526d.

Optionally, in order to be able to determine the smear column value more accurately, the blocks may overlap (not shown).

Optionally, if the blocks comprise several rows or columns, covered elements close to non-covered elements may be excluded from the blocks of covered elements. In this way the amount of light leakage is reduced.

There may be elements that do not belong to any block.

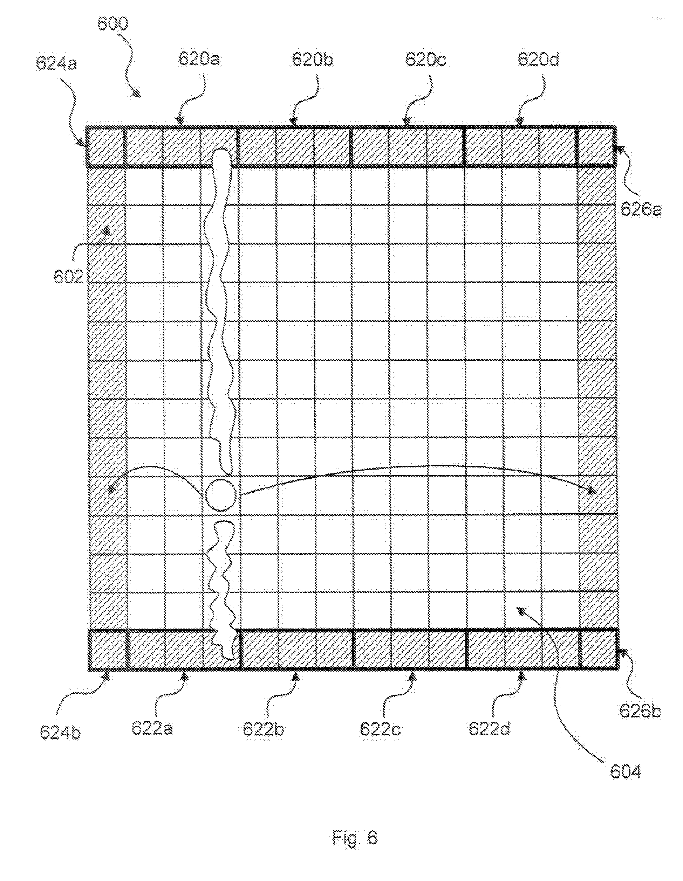

The elements referred to in fig 6 may be individual elements as well as groups of elements.

The number of first blocks, the number of second blocks, the number of third blocks and the number of fourth blocks may comprise any number of elements.

Although the number of first blocks are illustrated as four blocks, the number of first blocks may be any number. Correspondingly, the number of second blocks may be any number, the number of third blocks may be any number and the number of fourth blocks may be any number.

Fig 6 illustrates a second embodiment of a sensor matrix 600 comprising covered elements 602 and non-covered elements 604. Further, the covered elements 602 are sub-divided into a number of blocks, herein illustrated by thick lines.

As in fig 5, a number of first blocks 620a-620d and a number of second blocks 622a-622d are present in order to achieve a smear column value, as described above.

However, unlike the embodiment illustrated in fig 5, the third block is represented by an upper left element 624a and/or a lower left element 624b, and, correspondingly, the fourth block is represented by a right upper element 626a and/or a right lower element 626b.

Optionally, if several covered rows and covered columns are present, a number of covered elements may be used for each corner of the sensor matrix 600.

An advantage of this embodiment, using one or several of the corner elements in order to determine a smear reference value, is that the determination of a smear reference value may be determined rapidly.

The elements referred to in fig 6 may be individual elements as well as groups of elements.

Based upon the detected charge level of the first and/or second block, a smear column value is determined, and based upon the detected charge level of the third and/or the fourth block, a smear reference value is determined.

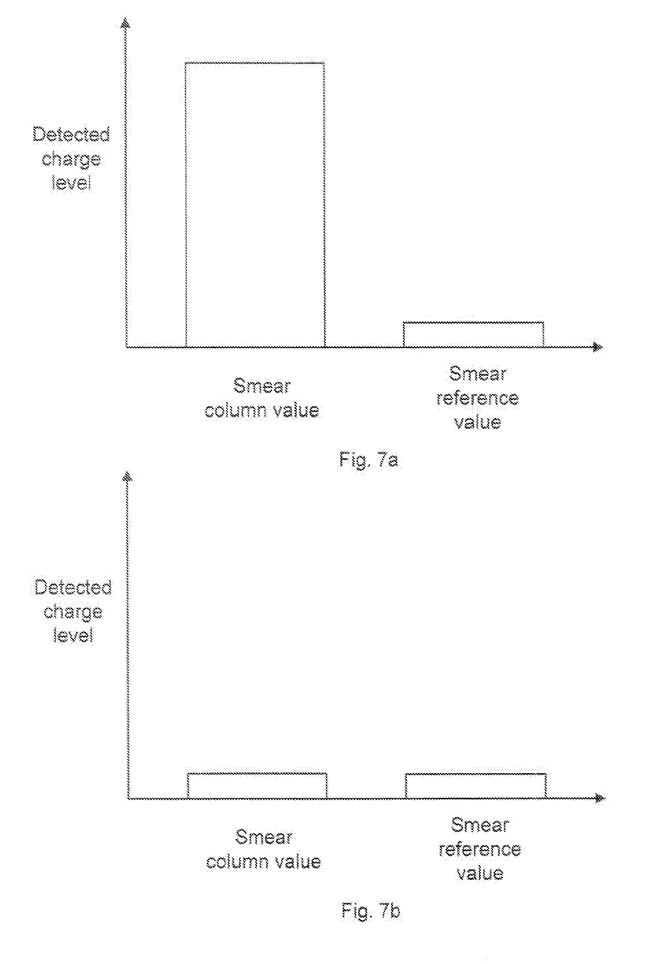

If visible smear is present, the smear column value will be higher than the smear reference value, as illustrated in fig 7a. Otherwise, if visible smear is not present, the smear column value will be approximately the same as the smear row value, as illustrated in fig 7b. Due to noise the smear reference value might have a small value, instead of being zero.

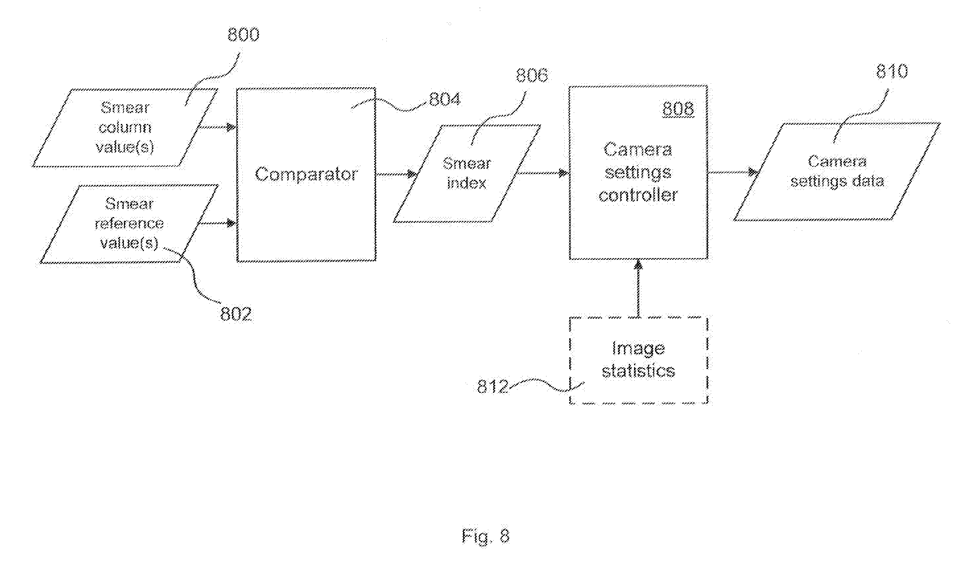

Fig 8 illustrates a general principle for reducing the amount of smear in image data generated by a CCD sensor.

A method according to the principle may be utilised as an iterative process, that stepwise reduces the amount of smear.

A smear column value 800 and a smear reference value 802 are input to a comparator 804, which is configured to compare the smear column value 800 and the smear reference value 802. Based upon this comparison, a smear index 806 is output from the comparator to a camera settings controller 808. The camera settings controller 808 determines, in turn, based upon the smear index 806, camera settings data 810. Such camera settings data 810 may comprise data indicating lens aperture size, exposure time, gain etc.

Optionally, image statistics 812, comprising e.g. colour distribution, from prior captured image data may be input to the camera settings controller 808 as well.

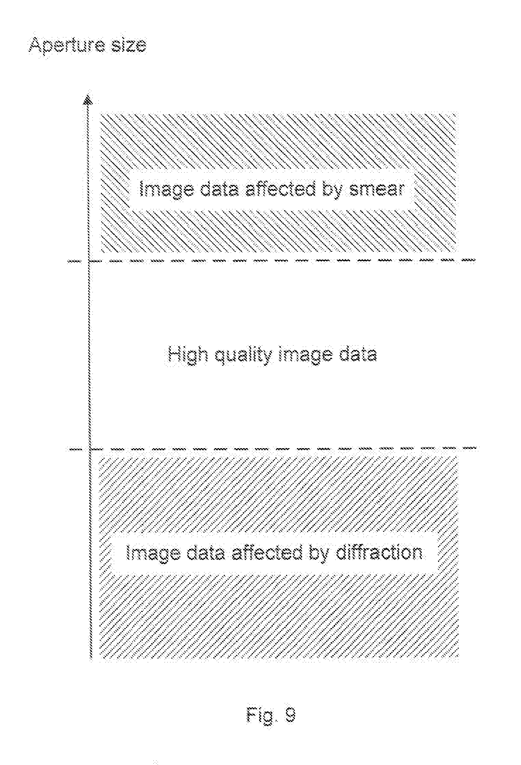

Fig 9 generally illustrates the occurrence of visible smear and diffraction in image data for different lens aperture size.

The occurrence of smear is higher when large amounts of light is incident onto the CCD sensor, e.g. when having a large lens aperture.

By reducing the amount of incident light onto the sensor, the quality of the image data is improved in terms of smear.

If an adjustable lens aperture is used, this means that the size of the aperture must be reduced.

A lens aperture having a very small size will give rise to visible diffraction, which, in turn, give rise to blurry image data.

Therefore, in order to output high quality image data, a camera comprising a CCD sensor will have a lens aperture between the border of visible smear and the border of visible diffraction.

However, in some cases with very intensive light, these borders may be very close. Hence, in these cases, the principle as described above may be used to minimise the effect of diffraction as much as possible, i.e. being close to the border of visible smear. This is especially of interest if no lens aperture information is output from the lens system to the camera settings controller.

Optionally, if severe smear is detected in a number of columns, these number of columns may be excluded from further smear reduction analysis. For instance, if sunlight is incident onto a number of elements of an image sensor, the columns of these number of elements may be excluded.

An advantage of excluding columns with severe smear is that the risk of affecting the rest of the elements with another type artefacts, such as diffraction artefacts, is reduced.

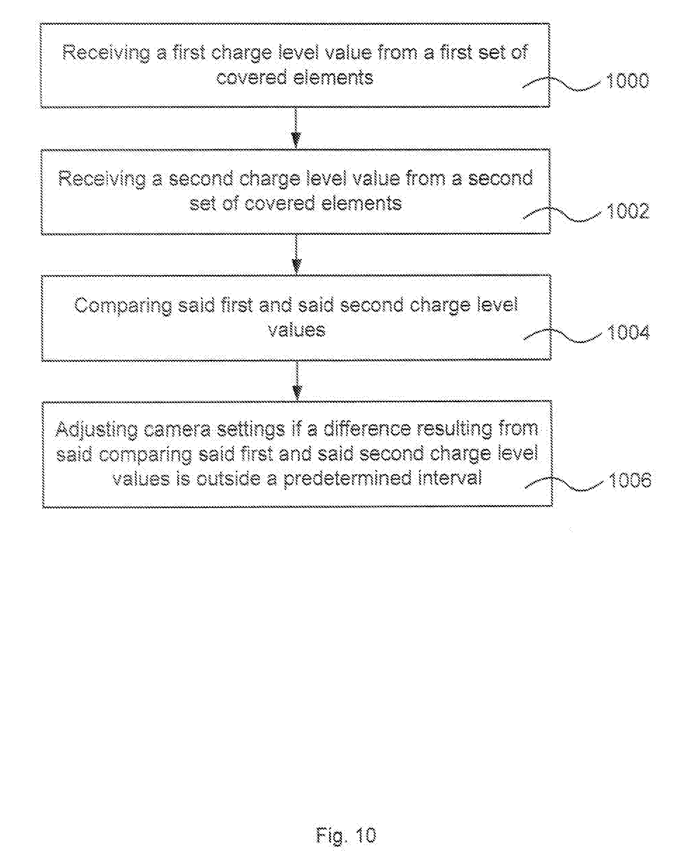

Fig 10 illustrates a method according to the present invention.

In a step 1000 a first charge level value from a first set of covered elements is received.

In a step 1002 a second charge level value from a second set of covered elements is received.

In a step 1004 the first and second charge level values are compared.

In a step 1006 the camera settings is adjusted if a difference resulting from the comparison of the first and the second charge level values is outside a predetermined interval.

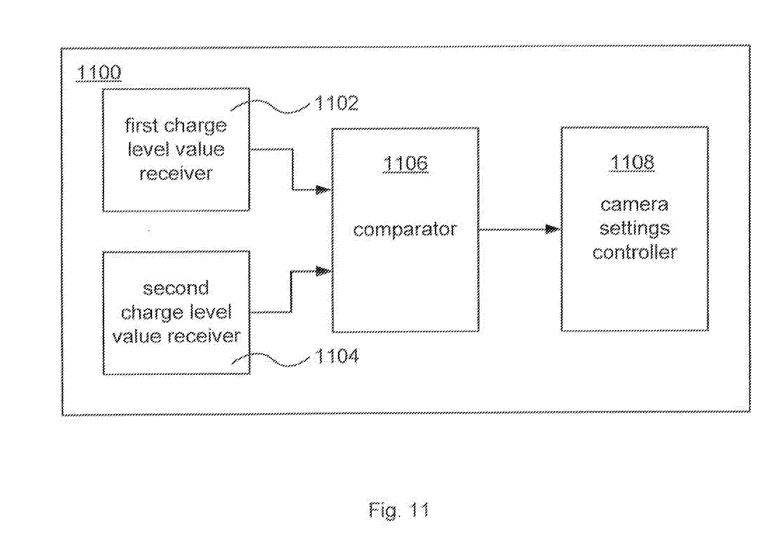

Fig 11 illustrates a smear reduction module 1100 according to the present invention.

A first charge level value is received by a first charge level receiver 1102.

A second charge level value is received by a second charge level receiver 1104.

The first and the second charge level values are transmitted to a comparator 1106, wherein the first and the second charge level values are compared.

If a difference resulting from the comparison made in the comparator 1106 is outside a predetermined interval, the camera settings is adjusted by a camera settings controller 1108.

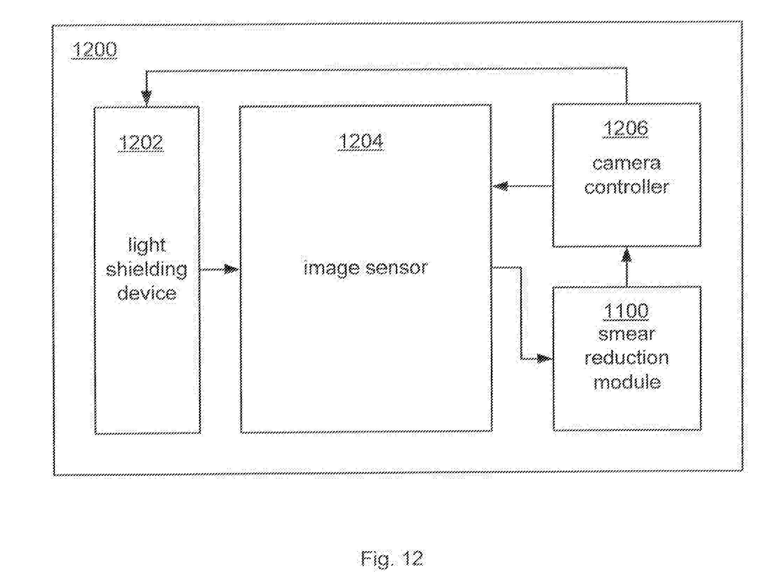

Fig 12 illustrates a camera 1200 according to the present invention.

Light is received, via a light shielding device 1202, such as a lens aperture, by an image sensor 1204. The first and the second charge level values are output from the image sensor 1204 to the smear reduction module 1100. The smear estimation data determined by the smear reduction module 1100 are output to a camera controller 1206 configured to control the function of the camera 1200. The camera controller 1206 transfers, in turn, control data to the light shielding device 1202 and/or the image sensor 1204.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for reducing smear effect in an image sensor comprising
receiving a first charge level value from a first set of covered elements,
receiving a second charge level value from a second set of covered elements,
comparing said first and said second charge level values, and
adjusting camera settings if a difference resulting from said comparing said first and said second charge level values is outside a predetermined interval.

2. The method according to claim 1, wherein said first set of covered elements is positioned in a first border area of said image sensor, and said second set of covered elements is positioned in a second border area of said image sensor.

3. The method according to any of the preceding claims, wherein said first set comprises at least one element of a smear insensitive reference array, and said second set comprises at least one element of a smear sensitive array.

4. The method according to any of the preceding claims, wherein said first set of elements and said second set of elements are disjunctive.

5. The method according to any of the preceding claims, wherein said first set of elements comprises at least one element selected from a group consisting of upper left corner elements, upper right corner elements, lower left corner elements and lower right corner elements.

6. The method according to any of the preceding claims, wherein said first set is larger than said second set.

7. The method according to any of the preceding claims, wherein said image sensor is a CCD sensor.

8. The method according to any of the preceding claims, wherein said adjusting of said camera settings comprise adjusting amount of incident light onto said image sensor.

9. The method according to claim 8, wherein said adjustment of incident light onto said image sensor is performed by a lens aperture adjustment.

10. The method according to any of the preceding claims, wherein said adjusting of said camera settings comprise adjusting an exposure time setting.

11. The method according to any of the preceding claims, wherein said adjusting of said camera settings comprise adjusting a gain setting.

12. The method according to any of the preceding claims, wherein said first set of covered elements is also utilised to achieve a reference black level.

13. A smear reduction module for reducing smear effect in an image sensor comprising
a first charge level value receiver configured to receive a first charge level value from a first set of covered elements,
a second charge level value receiver configured to receive a second charge level value from a second set of covered elements,
a comparator configured to compare said first and said second charge level values, and
a camera settings controller configured to adjust camera settings if a difference resulting from said comparing said first and said second charge level values is outside a predetermined interval.

14. The smear reduction module according to claim 13, wherein said first set of covered elements is positioned in a first border area of said image sensor, and said second set of covered elements is positioned in a second border area of said image sensor.

15. The smear reduction module according to claims 13 or 14, wherein said first set comprises at least one element of a smear insensitive reference array, and said second set comprises at least one element of a smear sensitive array.

16. The smear reduction module according to any of claims 13 to 15, wherein said first set of elements and said second set of elements are disjunctive.

17. The smear reduction module according to any of claims 13 to 16, wherein said first set of elements comprises at least one element selected from a group consisting of upper left corner elements, upper right corner elements, lower left corner elements and lower right corner elements.

18. The smear reduction module according to any of claims 13 to 17, wherein said first set of elements is larger than said second set of elements.

19. The smear reduction module according to any of claims 13 to 18, wherein said image sensor is a CCD sensor.

20. The smear reduction module according to any of claims 13 to 19, wherein said adjusting of said camera settings comprise adjusting amount of incident light onto said image sensor.

21. The smear reduction module according to claim 20, wherein said adjustment of incident light onto said image sensor is performed by a lens aperture setting.

22. The smear reduction module according to any of claims 13 to 21, wherein said adjusting of said camera settings comprise adjusting an exposure time setting.

23. The smear reduction module according to any of claims 13 to 22, wherein said adjusting of said camera settings comprise adjusting a gain setting.

24. The smear reduction module according to any of claims 13 to 23, wherein said first set of covered elements are also utilised to achieve a reference black level.

25. A camera comprising
an image sensor,
a camera controller,
a smear reduction module according to any of claim 13-24,
a light shielding device configured to affect the amount of light inciding onto said image sensor,
wherein smear control data is transferred from said smear reduction module to said camera controller, and from the camera controller control data is transferred to said light shielding device.

26. The camera according to claim 25, wherein said image sensor is a CCD sensor.

27. A computer program arranged to perform the method according to any of the claims 1-12 when downloaded into and run on a processor.
